# EUROPÄISCHE PATENTSCHRIFT

(11) **EP 3 837 073 B1**
(45) Veröffentlichungstag und Bekanntmachung des Hinweises auf die Patenterteilung: **10.08.2022**
(21) Anmeldenummer: 19742281.9
(22) Anmeldetag: 28.06.2019
(51) Int. Cl.: B23B 31/28, B23Q 1/00, B24B 41/06, B23Q 3/152, B23Q 3/154, B25B 11/00, B25B 5/06

(54) **SPANNSYSTEM FÜR EINE SCHLEIFMASCHINE**
MOUNTING SYSTEM FOR A GRINDING MACHINE
SYSTÈME DE SERRAGE POUR UNE MACHINE DE PONÇAGE

(30) Priorität: 16.08.2018 DE 102018119937; 05.02.2019 DE 102019102788
(43) Veröffentlichungstag der Anmeldung: 23.06.2021
(73) Patentinhaber: Schaeffler Technologies AG & Co. KG, 91074 Herzogenaurach (DE)
(72) Erfinder: RUSCHITZKA, Eckhard, 91074 Herzogenaurach (DE); KUCKUK, André, 91074 Herzogenaurach (DE)
(86) Internationale Anmeldenummer: PCT/DE2019/100602
(87) Internationale Veröffentlichungsnummer: WO 2020/035102

(56) Entgegenhaltungen:
- DE-A1-102015 220 533
- JP-A- H01 271 141
- JP-A- H03 184 735
- US-A- 2 864 622

## Beschreibung

Die Erfindung betrifft ein für eine Schleifmaschine geeignetes Spannsystem. Ferner betrifft die Erfindung ein Verfahren zur Handhabung eines solchen Spannsystems.

Aus der EP 1 736 265 B1 ist eine Maschinenspindel mit einer Spannstange und einer Kupplungseinrichtung bekannt. Die Kupplungseinrichtung dient dazu, eine elektrisch angetriebene Antriebswelle mit einer Arbeitswelle, welche zur Halterung eines Werkzeugs vorgesehen ist, zu verbinden. Die Kupplung wird beispielsweise mit Hilfe von Elektromagneten betätigt (Figur 2 der EP 1 736 265 B1). Alternativ wird in der EP 1 736 265 B1 (Figur1) eine durch Druckluft betätigte, Klemmkörper aufweisende Kupplung vorgeschlagen.

Die DE 34 15 333 A1 offenbart eine spitzenlose Schleifmaschine, welche eine Ladescheibenanordnung umfasst. Auf der Maschinenseite, welche die Ladescheibenanordnung umfasst, ist einer Schleifscheibe gegenüberliegend die Anordnung eines Antriebselements, das heißt Treibers, für ein Werkstück vorgesehen. Was das Spannen des Antriebselementes betrifft, wird in der DE 34 15 333 A1 auf die US 2,812,185 A verwiesen.

Die EP 3 263 274 A1 offenbart eine Spanneinrichtung mit einem Spannfutter und einem daran festspannbaren Spannelement. Die Spanneinrichtung ist Teil eines Spannsystems, mit welchem große Werkstücke oder Werkstückträger im Arbeitsbereich einer Bearbeitungsmaschine, beispielsweise einer Schleifmaschine, festgespannt werden können.

Die JP H03 184 735 A, welche der Stand der Technik ist, der dem Gegenstand von Anspruch 1 am nächsten kommt, offenbart ein Spannsystem mit einem innerhalb einer Magnetspule angeordneten Magnetkern. Der Magnetkern weist einen zylindrischen, langgestreckten Aufnahmebereich zur Aufnahme eines Spanndorns auf. Sie offenbart konkret ein Spannsystem, umfassend einen innerhalb einer Magnetspule angeordneten Magnetkern, welcher einen zylindrischen, langgestreckten Aufnahmebereich aufweist, sowie einen zum Einsetzen in den Aufnahmebereich vorgesehenen Spanndorn, an welchem lösbar ein scheibenförmiger, in einer zur Mittelachse des Aufnahmebereichs normalen Ebene liegender Werkstücktreiber befestigt ist, wobei eines der Elemente Magnetkern und Spanndorn eine nicht magnetische, zum Spannen des Spanndorns im Magnetkern ausgebildete Schnellspannvorrichtung aufweist.

Der Erfindung liegt die Aufgabe zugrunde, ein gegenüber dem Stand der Technik weiterentwickeltes, insbesondere für eine Schleifmaschine geeignetes Spannsystem anzugeben, welches sich durch eine verbesserte Handhabbarkeit bei zugleich hoher mechanischer Präzision auszeichnet.

Diese Aufgabe wird erfindungsgemäß gelöst durch ein Spannsystem mit den Merkmalen des Anspruchs 1. Das Spannsystem umfasst einen innerhalb einer Magnetspule angeordneten Magnetkern, welcher einen zylindrischen, langgestreckten Aufnahmebereich aufweist, sowie einen zum Einsetzen in den Aufnahmebereich vorgesehenen Schnellspanndorn, an welchem lösbar ein scheibenförmiger, in einer zur Mittelachse des Aufnahmebereichs normalen Ebene liegender Werkstücktreiber befestigt ist. Eines der beiden Elemente Magnetkern und Schnellspanndorn weist eine nicht magnetische, zum Spannen und zur korrekten Ausrichtung des Schnellspanndorns im Magnetkern ausgebildete Schnellspannvorrichtung auf.

Ebenso wird die Aufgabe gelöst durch ein Verfahren zur Handhabung eines solchen Spannsystems gemäß Anspruch 9. Dieses Verfahren weist folgende Merkmale auf:
- Eine feste Verbindung, insbesondere Schraubverbindung, zwischen dem Schnellspanndorn und dem Werkstücktreiber wird hergestellt,
- die aus dem Schnellspanndorn und dem Werkstücktreiber gebildete Baugruppe wird, soweit erforderlich, unabhängig vom Magnetkern, das heißt mittels einer gesonderten Schleifvorrichtung, plangeschliffen,
- der Schnellspanndorn wird in den Aufnahmebereich des Magnetkerns eingesetzt und dort auf nicht magnetische Weise, insbesondere hydraulisch, gespannt, womit er zugleich in exakt definierter Weise ausgerichtet wird,
- ein Werkstück wird ohne weitere Bearbeitung des Werkstücktreibers, insbesondere ohne nochmaliges Planschleifen, auf dem Werkstücktreiber magnetisch gespannt.

In bevorzugter Ausgestaltung des Verfahrens wird der bereits mit einer Werkstückspindel, insbesondere Schleifspindel, verbundene Magnetkern, das heißt dessen auch als Aufnahmebohrung bezeichneter Aufnahmebereich, auf Fertigmaß geschliffen, bevor die vorkonditionierte, das heißt plangeschliffene, Baugruppe aus Schnellspanndorn und Werkstücktreiber im Magnetkern hydraulisch oder mechanisch fixiert wird.

Im Folgenden im Zusammenhang mit dem Handhabungsverfahren erläuterte Ausgestaltungen und Vorteile der Erfindung gelten sinngemäß auch für das Spannsystem und umgekehrt.

Die Schnellspannvorrichtung kann entweder in den Magnetkern oder in den Schnellspanndorn integriert sein. In beiden Fällen kann es sich bei der Schnellspannvorrichtung entweder um eine hydraulische oder um eine mechanische Spannvorrichtung handeln.

Die Schnellspannvorrichtung weist vorzugsweise zwei voneinander beabstandete Spreizbereiche auf, wobei der in Axialrichtung des Schnellspanndorns sowie des entsprechend des Schnellspandorns langgestreckten Aufnahmebereichs gemessene Abstand zwischen der Mitte des eines Spreizbereichs und der Mitte des anderen Spreizbereichs vorzugsweise größer als der Durchmesser des Aufnahmebereichs ist, insbesondere mindestens das 1,5-fache des Durchmessers des Aufnahmebereichs beträgt.

Zur Betätigung der Schnellspannvorrichtung ist in vorteilhafter Ausgestaltung eine Einstellschraube vorgesehen, welche bei mit dem Schnellspanndorn verbundenen Werkstücktreiber durch eine Öffnung im Werkstücktreiber hindurch betätigbar ist. Der Werkstücktreiber ist hierbei zum Beispiel mit drei Schrauben am Schnellspanndorn festgeschraubt.

Ein wesentlicher Unterschied zum Stand der Technik ist bei dem Spannsystem darin gegeben, dass die gewünschte, exakt definierte Ausrichtung eines Werkstücktreibers, welche für einen Planlauf erforderlich ist, nicht durch eine spindelseitige Planfläche, an welcher der Werkstücktreiber anliegt, sondern durch die in Axialrichtung des Schnellspanndorns ausgedehnte Schnellspannvorrichtung in Zusammenwirkung mit einem Aufnahmebereich genau bestimmter Geometrie erreicht wird.

Die vorkonditionierte Baugruppe, welche aus dem Schnellspanndorn und dem Werkstücktreiber gebildet ist, kann mehrfach in den Magnetkern eingebaut und aus diesem ausgebaut werden, ohne im eingebauten Zustand, etwa durch Schleifen, nachbearbeitet werden zu müssen. Lediglich eine Stirnfläche am Magnetkern kann bei Umrüstarbeiten einer Reinigung bedürfen. Anschließend kann der langgestreckte Schaft des Schnellspanndorns bis zum Anschlag an dieser Stirnfläche in den Aufnahmebereich eingeschoben und dort, vorzugsweise durch Drehung einer auf ein Hydraulikmedium wirkenden Einstellschraube, fixiert werden.

Das Spannsystem kommt zum Beispiel bei einer Einstechschleifmaschine zum Einsatz. Zum technologischen Hintergrund wird beispielhaft auf die Dokumente DE 30 44 818 A1 und DE 27 55 494 A1 verwiesen.

Nachfolgend werden mehrere Ausführungsbeispiele der Erfindung anhand einer Zeichnung näher erläutert. Hierin zeigen:
- Fig. 1: ein Spannsystem in grob schematisierter Darstellung,
- Fig. 2: einen hydraulischen Schnellspanndorn,
- Fig. 3: einen mechanischen Schnellspanndorn,
- Fig. 4: ein Spannsystem mit einem Magnetkern, welcher zugleich als hydraulisches Spannfutter ausgebildet ist,
- Fig. 5: ein Spannsystem mit einem an einer Schleifspindel befestigten Magnetkern und einer in diesem hydraulisch gespannten, aus einem Schnellspanndorn und einem Werkstücktreiber gebildeten Baugruppe in einer im Vergleich zu Fig. 1 detaillierteren Darstellung,
- Fig. 6: den Werkstücktreiber der Anordnung nach Fig. 5.

Die folgenden Erläuterungen beziehen sich, soweit nicht anders angegeben, auf sämtliche Ausführungsbeispiele. Einander entsprechende oder prinzipiell gleichwirkende Teile sind in allen Figuren mit den gleichen Bezugszeichen gekennzeichnet.

Ein insgesamt mit dem Bezugszeichen 1 gekennzeichnetes Spannsystem ist für die Verwendung in einer Schleifmaschine, nämlich Einstechschleifmaschine, geeignet. Zu schleifende Werkstücke sind magnetisch zu spannen. Eine Werkstückspindel 2 ist im vorliegenden Fall Teil der nicht weiter dargestellten Schleifmaschine.

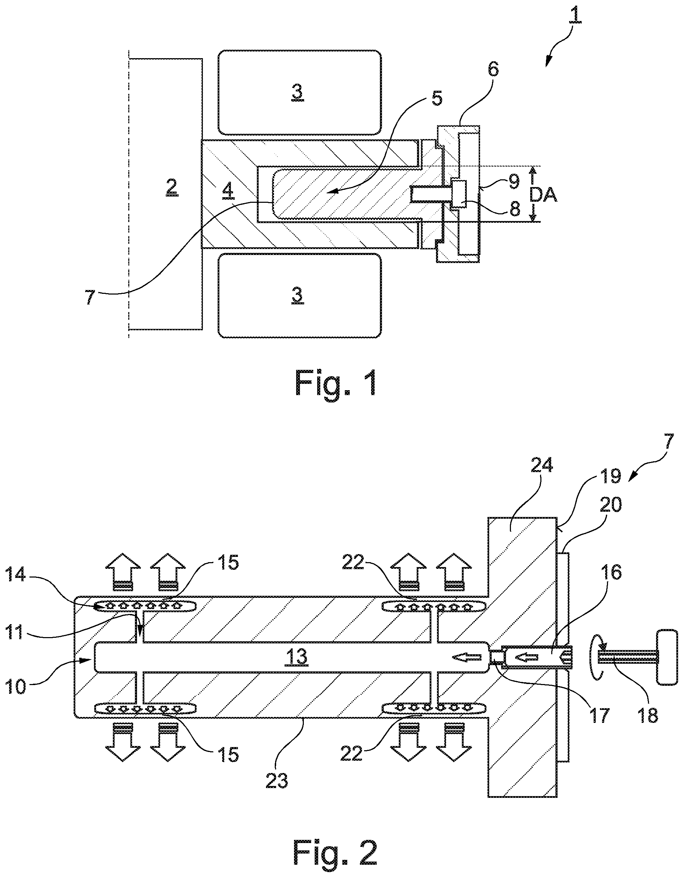

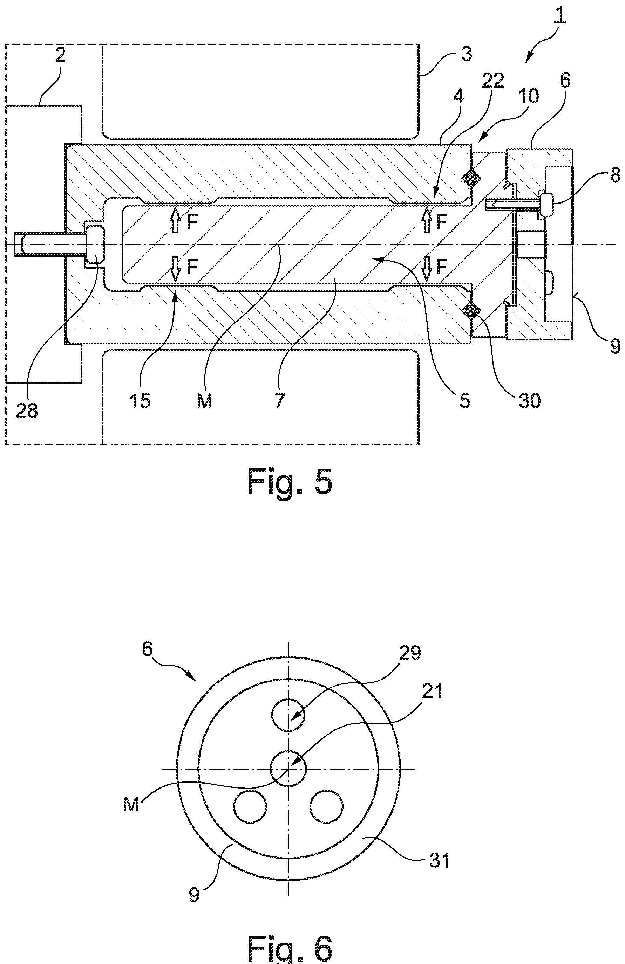

An der Werkstückspindel 2 ist ein Magnetkern 4 befestigt, welcher von einer Magnetspule 3 umgeben ist. Der Magnetkern 4 weist einen zylindrischen, langgestreckten Aufnahmebereich 5 auf, welcher auch als Aufnahmebohrung bezeichnet wird. Im Aufnahmebereich 5 ist ein Schnellspanndorn 7 fixierbar, welcher beim Betrieb der Schleifmaschine mit einem Werkstücktreiber 6 verbunden ist und eine rotierende Baugruppe darstellt. Die Mittelachse dieser Baugruppe 6, 7 ist mit der Rotationsachse der Schleifspindel 2 identisch und mit M bezeichnet. Eine einzige Fixierschraube 8 (Figur 1) oder eine Mehrzahl solcher Fixierschrauben 8 (Figur 5) stellen die feste Verbindung zwischen dem Werkstücktreiber 6 und dem Schnellspanndorn 7 her. Der Werkstücktreiber 6 hat die Grundform einer Scheibe, welche in einer zur Mittelachse M normalen Ebene liegt.

Bei der Vorbereitung der Baugruppe 6, 7 für die Verwendung in der Schleifmaschine, welche die Werkstückspindel 2 umfasst, wird zunächst der Werkstücktreiber 6 am Schnellspanndorn 7 festgeschraubt. Anschließend wird die Baugruppe 6, 7 mittels einer weiteren, nicht dargestellten Schleifvorrichtung bearbeitet. Die gesonderte Schleifvorrichtung weist einen Spannmechanismus auf, welcher hinsichtlich seiner Dimensionierung mit dem Aufnahmebereich 5 vergleichbar ist. Während der Schnellspanndorn 7 im Spannmechanismus der gesonderten Schleifvorrichtung fixiert ist, wird eine mit 9 bezeichnete Werkstück-Anschlagsfläche des Werkstücktreibers 6 auf Fertigmaß plangeschliffen. Ein weiteres Schleifen dieser Werkstück-Anschlagsfläche 9 in einem späteren Verfahrensstadium ist in der Regel nicht mehr erforderlich. Ausnahmen können zum Beispiel gegeben sein, wenn zwischenzeitlich die Spannung der Fixierschrauben 8 geändert wird. In abgewandelten, nicht dargestellten Ausführungsformen, in welchen die Fixierschrauben 8 entfallen, kann der Werkstücktreiber 6 einteilig mit dem Schnellspanndorn 7 ausgebildet sein. Alternativ kann das erstmalige Planschleifen des Werkstücktreibers 6 im eingebauten Zustand in der Maschine erfolgen.

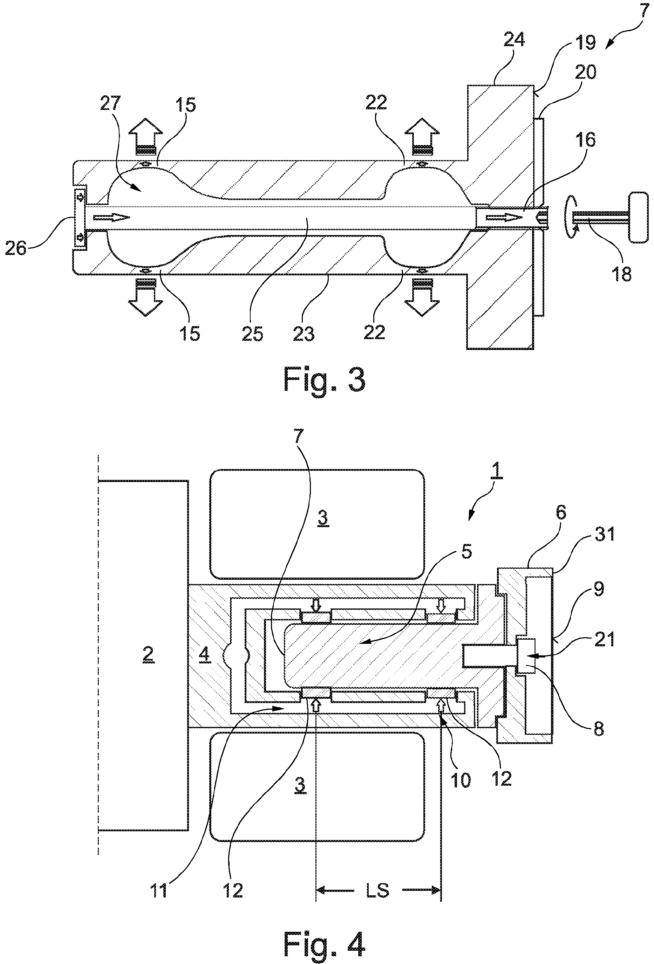

Nach dem Schleifen der Werkstück-Anschlagsfläche 9 auf Fertigmaß ist die Baugruppe 6, 7 vorkonditioniert. In diesem Zustand ist ein schnelles Auswechseln der Baugruppe 6, 7 an der Werkstückspindel 2 möglich. Das Spannen des Schnellspanndorns 7 im Magnetkern 4 erfolgt mit Hilfe einer Schnellspannvorrichtung 10, welche entweder in den Schnellspanndorn 7 oder in den Magnetkern 4 (Figur 4) integriert ist.

In der Ausführungsform nach Figur 2 ist die Schnellspannvorrichtung 10 als hydraulische Spannvorrichtung des Schnellspanndorns 7 ausgeführt. Der Schnellspanndorn 7 beschreibt im Längsschnitt nach Figur 2 eine T-Form mit einem zylindrischen Abschnitt 23 und einem diesen abschließenden Flansch 24. An der Stirnseite des Flansches 24 befinden sich eine zylindrische Treiberaufnahme 20 sowie eine diese ringförmig umgebende Treiberanschlagsfläche 19.

Innerhalb des zylindrischen Abschnitts 23 des Schnellspanndorns 7 nach Figur 2 befindet sich eine zentrale Fluidkammer 13, die sich über den größten Teil der Länge des zylindrischen Abschnitts 23 erstreckt. Von der zentralen Fluidkammer 13 gehen mehrere Fluidkanäle 11 aus, die in äußeren Fluidkammern 14 enden. Die äußeren Fluidkammern 14 sind radial unmittelbar umgeben von Spreizbereichen 15, 22, welche sich nahe des in den Aufnahmebereich 5 einzusetzenden Endes des zylindrischen Abschnitts 23 beziehungsweise nahe des Flansches 24 befinden.

Der Druck innerhalb der zentralen Fluidkammer 13 sowie der damit verbundenen äußeren Fluidkammern 14 ist einstellbar mit Hilfe einer Einstellschraube 16, die auf einen Kolben 17 wirkt. Zusätzlich ist in Figur 2 ein Betätigungswerkzeug 18 zum Betätigen der Einstellschraube 16 angedeutet. Das Betätigungswerkzeug 18 kann durch eine Öffnung des in Figur 2 nicht dargestellten Werkstücktreibers 6 hindurch an der Stirnseite des Flansches 24 angesetzt werden.

Der Schnellspanndorn 7 nach Figur 3 ist ebenso wie der Schnellspanndorn 7 nach Figur 2 in dem Spannsystem 1 nach Figur 1 verwendbar. Von der Bauform nach Figur 2 unterscheidet sich der Schnellspanndorn 7 nach Figur 3 dadurch, dass er als mechanisches Spannelement ausgebildet ist. Die Einstellschraube 16 greift in diesem Fall einen Zuganker 25 an, welcher nahezu den gesamten zylindrischen Abschnitt 23 durchzieht und an dessen Ende mittels einer Platte 26 verankert ist. Die Lage der Spreizbereiche 15, 22 entspricht dem Ausführungsbeispiel nach Figur 2. In der Bauform nach Figur 3 ist an den Spreizbereichen 15, 22 die Wandstärke des zylindrischen Abschnitts 23 drastisch herabgesetzt, sodass die entsprechenden Bereiche 15, 22 durch Zugkräfte, die in den Zuganker 25 eingeleitet werden und durch Druckkräfte innerhalb der Spreizbereiche 15, 22 aufzunehmen sind, elastisch verformbar sind.

Das Spannsystem 1 nach Figur 4 unterscheidet sich von den Ausführungsformen nach den Figuren 2 und 3 dadurch, dass die Schnellspannvorrichtung 10 nicht in den Schnellspanndorn 7, sondern in den Magnetkern 4 integriert ist. Dementsprechend befinden sich Fluidkanäle 11 in diesem Fall innerhalb des Magnetkerns 4. Über die Fluidkanäle 11 sind Anpresselemente 12, welche den Schnellspanndorn 7 an entsprechenden Spreizbereichen 15, 22 an zwei axial voneinander beabstandeten Stellen kontaktieren, mit Druck beaufschlagbar. Der axiale Abstand zwischen den jeweils ringförmig um den Schnellspanndorn 7 angeordneten Anpresselementen 12 ist mit LS bezeichnet. In analoger Weise ist bei den Schnellspanndornen 7 nach Figur 2 und Figur 3 unter LS der axiale Abstand zwischen der Mitte des Spreizbereichs 15 und der Mitte des Spreizbereichs 22 zu verstehen. Eine Druckeinstellmöglichkeit am Schnellspanndorn 7 entfällt bei der Ausgestaltung nach Figur 4. Der Werkstücktreiber 6 ist durch eine einzige, zentrale Fixierschraube 8, welche durch eine Öffnung 21 im Werkstücktreiber 6 durchgesteckt ist, am Schnellspanndorn 7 befestigt.

Weitere geometrische Merkmale eines Schnellspanndorns 7, eines Werkstücktreibers 6, sowie eines Magnetkerns 4 sind in den Figuren 5 und 6 illustriert. In den Spreizbereichen 15, 22 wirkende Kräfte sind mit F bezeichnet. Der in Figur 5 nicht eingezeichnete Spannmechanismus kann entweder gemäß Figur 2 hydraulisch oder gemäß Figur 3 mechanisch arbeiten. Im letztgenannten Fall weist der zylindrische Abschnitt 23, wie in Figur 3 erkennbar, einen Hohlraum 27 auf.

Der Magnetkern 4 ist in der Ausgestaltung nach Figur 5 mit einer zentralen Schraube 28 an der Schleifspindel 2 befestigt. In den beiden jeweils ringförmigen Abschnitten des Aufnahmebereichs 5, an welche die Spreizbereiche 15, 22 angepresst werden, ist der Durchmesser des Aufnahmebereichs 5 etwas reduziert. Damit ist sichergestellt, dass lediglich in zwei definierten Bereichen, deren Abstand LS beträgt, ein Kontakt zwischen dem Schnellspanndorn 7 und der Wandung des Aufnahmebereichs 5 gegeben ist. Der minimale Innendurchmesser des Aufnahmebereichs 5 ist mit DA (Figur 1) bezeichnet. Der Durchmesser DA ist geringer als die Länge LS, das heißt der Abstand zwischen den beiden Spreizbereichen 15, 22.

Der Aufnahmebereich 5 ist in der Ausgestaltung nach Figur 5 gegenüber dem Außenraum durch eine Dichtung 30 abgedichtet, welche zwischen eine Nut an der Stirnseite des Magnetkerns 4 und eine Nut am Flansch 24 des Schnellspanndorns 7 eingelegt ist. Die Verbindung zwischen dem Schnellspanndorn 7 und dem Werkstücktreiber 6 ist gemäß Figur 5 durch eine Mehrzahl an Fixierschrauben 8 hergestellt, welche in einem ringförmigen Bereich außerhalb der Mittelachse M angeordnet sind. Die Fixierschrauben 8 befinden sich damit radial innerhalb eines ringförmigen Randbereichs 31, welcher die Werkstück-Anschlagsfläche 9 bereitstellt. Durch die zentrale Öffnung 21 des Werkstücktreibers 6 hindurch kann die in Figur 5 nicht dargestellte Einstellschraube 16 betätigt werden. Damit lässt sich praktisch mit einem einzigen Griff der in den Magnetkern eingesetzte Schnellspanndorn 7 in geometrisch exakt definierter Position spannen. Anschließend kann - ohne Nachbearbeitung der Werkstück-Anschlagsfläche 9 - sofort das zu schleifende Werkstück, beispielsweise ein Wälzlagerring, auf die Werkstück-Anschlagsfläche 9 aufgesetzt und dort magnetisch gespannt werden.

### Bezugszeichenliste

- 1: Spannsystem
- 2: Werkstückspindel
- 3: Magnetspule
- 4: Magnetkern
- 5: Aufnahmebereich
- 6: Werkstücktreiber
- 7: Schellspanndorn
- 8: Fixierschraube
- 9: Werkstück-Anschlagsfläche
- 10: Schnellspannvorrichtung
- 11: Fluidkanal
- 12: Anpresselement
- 13: Zentrale Fluidkammer
- 14: Äußere Fluidkammer
- 15: Spreizbereich
- 16: Einstellschraube
- 17: Kolben
- 18: Betätigungswerkzeug
- 19: Treiberanschlagsfläche
- 20: Treiberaufnahme
- 21: Öffnung
- 22: Spreizbereich
- 23: Zylindrischer Abschnitt
- 24: Flansch
- 25: Zuganker
- 26: Platte
- 27: Hohlraum
- 28: Schraube
- 29: Bohrung
- 30: Dichtung
- 31: Ringförmiger Randbereich

- DA: Durchmesser des Aufnahmebereichs
- F: Kraft
- LS: Länge des Spreizsystems
- M: Mittelachse

## Patentansprüche

1. Spannsystem (1), umfassend einen innerhalb einer Magnetspule (3) angeordneten Magnetkern (4), welcher einen zylindrischen, langgestreckten Aufnahmebereich (5) aufweist, sowie einen zum Einsetzen in den Aufnahmebereich (5) vorgesehenen Schnellspanndorn (7), an welchem lösbar ein scheibenförmiger, in einer zur Mittelachse (M) des Aufnahmebereichs (5) normalen Ebene liegender Werkstücktreiber (6) befestigt ist, wobei eines der Elemente Magnetkern (4) und Schnellspanndorn (7) eine nicht magnetische, zum Spannen des Schnellspanndorns (7) im Magnetkern (4) ausgebildete Schnellspannvorrichtung (10) aufweist.

2. Spannsystem (1) nach Anspruch 1, **dadurch gekennzeichnet, dass** die Schnellspannvorrichtung (10) in den Magnetkern integriert ist.

3. Spannsystem (1) nach Anspruch 1, **dadurch gekennzeichnet, dass** die die Schnellspannvorrichtung (10) in den Schnellspanndorn integriert ist.

4. Spannsystem (1) nach Anspruch 2 oder 3, **dadurch gekennzeichnet, dass** die Schnellspannvorrichtung (10) als hydraulische Spannvorrichtung ausgebildet ist.

5. Spannsystem (1) nach Anspruch 2 oder 3, **dadurch gekennzeichnet, dass** die Schnellspannvorrichtung (10) als mechanische Spannvorrichtung ausgebildet ist.

6. Spannsystem (1) nach Anspruch 4 oder 5, **dadurch gekennzeichnet, dass** die Schnellspannvorrichtung (10) zwei in Axialrichtung des Schnellspanndorns (7) voneinander beabstandete Spreizbereiche (15, 22) aufweist.

7. Spannsystem (1) nach Anspruch 6, **dadurch gekennzeichnet, dass** der in Axialrichtung gemessene Abstand zwischen der Mitte des ersten Spreizbereiches (15) und der Mitte des zweiten Spreizbereiches (22) größer als der Durchmesser (DA) des Aufnahmebereichs (5) ist.

8. Spannsystem (1) nach einem der Ansprüche 3 bis 7, **gekennzeichnet** eine zur Betätigung der Schnellspannvorrichtung (10) vorgesehene Einstellschraube (16), welche bei mit dem Schnellspanndorn (7) verbundenen Werkstücktreiber (6) durch eine Öffnung (21) im Werkstücktreiber (5) hindurch betätigbar ist.

9. Verfahren zur Handhabung eines Spannsystems (1) nach Anspruch 1, welches einen Magnetkern (4) mit einem zylindrischen, langgestreckten Aufnahmebereich (5), einen Schnellspanndorn (7), sowie einen Werkstücktreiber (6) umfasst, mit folgenden Merkmalen:
- Eine feste Verbindung zwischen dem Schnellspanndorn (7) und dem Werkstücktreiber (6) wird hergestellt,
- die aus dem Schnellspanndorn (7) und dem Werkstücktreiber (6) gebildete Baugruppe wird plangeschliffen, wobei sie vom Magnetkern (4) getrennt ist,
- der Schnellspanndorn (7) wird in den Aufnahmebereich (5) des Magnetkerns (4) eingesetzt und dort auf nicht magnetische Weise gespannt,
- ein Werkstück wird ohne weitere Bearbeitung des Werkstücktreibers (6) auf diesem magnetisch gespannt.

10. Verfahren nach Anspruch 9, **dadurch gekennzeichnet, dass** der Magnetkern (4) mit einer Werkstückspindel (2) verbunden wird und anschließend, vor dem Einsetzen des Schnellspanndorns (7), der Aufnahmebereich (5) auf Fertigmaß geschliffen wird.

## Claims

1. A mounting system (1) comprising a magnet core (4), which is arranged inside a magnet coil (3) and has a cylindrical, elongate receiving region (5), and a rapid-mounting mandrel (7) provided for insertion into the receiving region (5), on which rapid-mounting mandrel a discoid workpiece driver (6), which is in a plane normal to the central axis (M) of the receiving region (5), is detachably fastened, wherein one of the elements (magnet core (4) and rapid-mounting mandrel (7)) has a non-magnetic rapid-mounting device (10) formed in the magnet core (4) for mounting the rapid-mounting mandrel (7).

2. The mounting system (1) according to claim 1, **characterised in that** the rapid-mounting device (10) is integrated into the magnet core.

3. The mounting system (1) according to claim 1, **characterised in that** the rapid-mounting device (10) is integrated into the rapid-mounting mandrel.

4. The mounting system (1) according to claim 2 or 3, **characterised in that** the rapid-mounting device (10) is formed as a hydraulic mounting device.

5. The mounting system (1) according to claim 2 or 3, **characterised in that** the rapid-mounting device (10) is formed as a mechanical mounting device.

6. The mounting system (1) according to claim 4 or 5, **characterised in that** the rapid-mounting device (10) has two expansion regions (15, 22) spaced apart from one another in the axial direction of the rapid-mounting mandrel (7).

7. The mounting system (1) according to claim 6, **characterised in that** the distance measured in the axial direction between the centre of the first expansion region (15) and the centre of the second expansion region (22) is greater than the diameter (DA) of the receiving region (5).

8. The mounting system (1) according to any one of claims 3 to 7, **characterised by** an adjusting screw (16) provided for actuating the rapid-mounting device (10), which, when the workpiece driver (6) is connected to the rapid-mounting mandrel (7), can be actuated through an opening (21) in the workpiece driver (5).

9. A method for handling a mounting system (1) according to claim 1, which comprises a magnet core (4) having a cylindrical, elongate receiving region (5), a rapid-mounting mandrel (7), and a workpiece driver (6), having the following features:
- a fixed connection is established between the rapid-mounting mandrel (7) and the workpiece driver (6),
- the assembly formed from the rapid-mounting mandrel (7) and the workpiece driver (6) is surface-ground, while it is separated from the magnet core (4),
- the rapid-mounting mandrel (7) is inserted into the receiving region (5) of the magnet core (4) and mounted there in a non-magnetic manner,
- a workpiece is mounted magnetically on the workpiece driver (6) without further processing.

10. The method according to claim 9, **characterised in that** the magnet core (4) is connected to a workpiece spindle (2) and then, before the rapid-mounting mandrel (7) is inserted, the receiving region (5) is ground to the finished size.

## Revendications

1. Système de serrage (1) comprenant un noyau magnétique (4) disposé à l'intérieur d'une bobine magnétique (3), qui présente une zone de réception (5) cylindrique, allongée, ainsi qu'un mandrin de serrage rapide (7) destiné à être inséré dans la zone de réception (5), auquel est fixé de manière amovible un dispositif d'entraînement de pièce discoïde (6), situé dans un plan normal à l'axe central (M) de la zone de réception (5), l'un des éléments, à savoir le noyau magnétique (4) et le mandrin de serrage rapide (7), comportant un dispositif de serrage rapide (10) non magnétique, conçu pour serrer le mandrin de serrage rapide (7) dans le noyau magnétique (4).

2. Système de serrage (1) selon la revendication 1, **caractérisé en ce que** le dispositif de serrage rapide (10) est intégré dans le noyau magnétique.

3. Système de serrage (1) selon la revendication 1, **caractérisé en ce que** le dispositif de serrage rapide (10) est intégré dans le mandrin de serrage rapide.

4. Système de serrage (1) selon la revendication 2 ou 3, **caractérisé en ce que** le dispositif de serrage rapide (10) est conçu comme un dispositif de serrage hydraulique.

5. Système de serrage (1) selon la revendication 2 ou 3, **caractérisé en ce que** le dispositif de serrage rapide (10) est conçu comme un dispositif de serrage mécanique.

6. Système de serrage (1) selon la revendication 4 ou 5, **caractérisé en ce que** le dispositif de serrage rapide (10) présente deux zones d'écartement (15, 22) espacées l'une de l'autre dans la direction axiale du mandrin de serrage rapide (7).

7. Système de serrage (1) selon la revendication 6, **caractérisé en ce que** la distance entre le centre de la première zone d'écartement (15) et le centre de la seconde zone d'écartement (22), mesurée dans la direction axiale, est supérieure au diamètre (DA) de la zone de réception (5).

8. Système de serrage (1) selon l'une des revendications 3 à 7, **caractérisé par** une vis de réglage (16) destinée à actionner le dispositif de serrage rapide (10), qui peut être actionnée à travers une ouverture (21) dans le dispositif d'entraînement de pièce (5) lorsque le dispositif d'entraînement de pièce (6) est relié au mandrin de serrage rapide (7).

9. Procédé de manipulation d'un système de serrage (1) selon la revendication 1, qui comprend un noyau magnétique (4) avec une zone de réception (5) cylindrique, allongée, un mandrin de serrage rapide (7), ainsi qu'un dispositif d'entraînement de pièce (6), avec les caractéristiques suivantes :
- une liaison solide est établie entre le mandrin à serrage rapide (7) et le dispositif d'entraînement de pièce (6),
- l'ensemble formé par le mandrin à serrage rapide (7) et le dispositif d'entraînement de pièce (6) est soumis à une rectification plane en étant séparé du noyau magnétique (4),
- le mandrin à serrage rapide (7) est inséré dans la zone de réception (5) du noyau magnétique (4) et y est serré de manière non magnétique,
- une pièce à usiner est serrée magnétiquement sur le dispositif d'entraînement de pièce (6) sans autre traitement de celui-ci.

10. Procédé selon la revendication 9, **caractérisé en ce que** le noyau magnétique (4) est relié à une broche porte-pièce (2) et qu'ensuite, avant la mise en place du mandrin à serrage rapide (7), la zone de réception (5) est rectifiée aux dimensions finales.
